# EUROPEAN PATENT APPLICATION

(11) **EP 2 055 622 A2**
(43) Date of publication of application: **06.05.2009**
(21) Application number: 08168358.3
(22) Date of filing: 05.11.2008
(51) Int. Cl.: B62J 25/00

(54) **Adjustable footrest assembly for motor vehicles**

(30) Priority: 05.11.2007 IT BO20070736
(71) Applicant: F. Fabbri Accessori S.r.l., 40023 Castel Guelfo (Bologna) (IT); Highftech Engineering S.r.l., 41100 Modena (IT)
(72) Inventor: Corsini, Riccardo, 41100, Modena (IT)
(74) Representative: Lanzoni, Luciano

(57) **Abstract**

The footrest (1a) for motor vehicles comprises a supporting structure (2) designed to be stably connected to the frame of a motor vehicle and has a circular housing (5); the footrest (1a) also comprises a first circular element (6) located inside the housing (5) and designed to rotate relative to the housing (5) itself, a second circular element (9) located at least partially inside a cylindrical compartment (7) made in the first element (6), and a footrest piece (10) fixed eccentrically on the second circular element (9).

## Description

This invention addresses the field of motor vehicles and motor vehicle accessories.

The invention relates in particular to an adjustable footrest assembly for motorcycles.

On leaving the factory where it is manufactured, a motor vehicle of this kind, hereinafter referred to simply as motorbike, is normally equipped with two footrest assemblies, one on each side.

These footrest assemblies are fixed to the motorbike frame or otherwise attached to it, even indirectly.

There are many reasons why this fixed footrest arrangement is unsatisfactory: one is that it is impossible to adapt the position of the footrests to the rider's height; another reason is that the footrests cannot be positioned in a way that meets the requirements of sports riders who, during racing, unlike normal road use, are used to folding the footrests up and back so as not to interfere with motorbike tilt.

The road setup of the footrest assemblies is in fact incompatible with sports racing use of the motorbike. When taking fast curves the rider has to tilt and lean the motorbike very low towards the road surface. This is impossible with a standard road setup because the footrest would come into contact with the road surface, causing the rider to fall.

To meet the requirements of users who are not normally satisfied with the standard footrest setup provided by motorbike makers, several motorbike accessory manufacturers have developed various different kinds of footrests, including adjustable footrests, for sports racing use.

Adjustable footrests known in the prior art are not, however, free of disadvantages.

Many prior art adjustable footrests have a limited number of predetermined positions, that is to say, they do not allow precise adjustment of each single position.

Moreover, in many prior art footrests, once adjusted to one of the positions, the lever arms used to operate the brake and speed change controls, cannot always be maintained in the factory set arrangement optimized by the manufacturer.

This invention therefore has for an aim to provide an adjustable footrest assembly for motorcycles which overcomes the above mentioned disadvantages and which is at once structurally simple, easy to fit and practical and efficient to use.

The technical characteristics of the invention, with reference to the above aim, can be easily inferred from the appended claims, in particular claim 1, and preferably from any of the claims that depend, directly or indirectly, on claim 1.

Further, the advantages of the invention will become more apparent from the detailed description which follows, with reference to the accompanying drawings which illustrate preferred embodiments of the invention provided merely by way of example without limiting the scope of the inventive concept, and in which:
- Figures 1 and 2 are schematic perspective views illustrating, respectively, the front and the back of a first embodiment of the footrest assembly for motor vehicles according to the invention;
- Figure 1a is a section view according to the plane P1 of Figure 1, with some parts cut away to better illustrate others;
- Figure 3 is an exploded view of the footrest assembly of Figures 1 and 2;
- Figure 4 is a schematic perspective view of a detail of the footrest assembly of Figure 3;
- Figure 5 is a schematic front elevation view of a second embodiment of the motor vehicle footrest assembly according to the invention;
- Figure 6 is a section view along the line VI-VI of Figure 5.

With reference to the accompanying drawings, the reference numerals 1a, 1b denote two, respectively first and a second, alternative embodiments of the motor vehicle footrest assembly according to this invention.

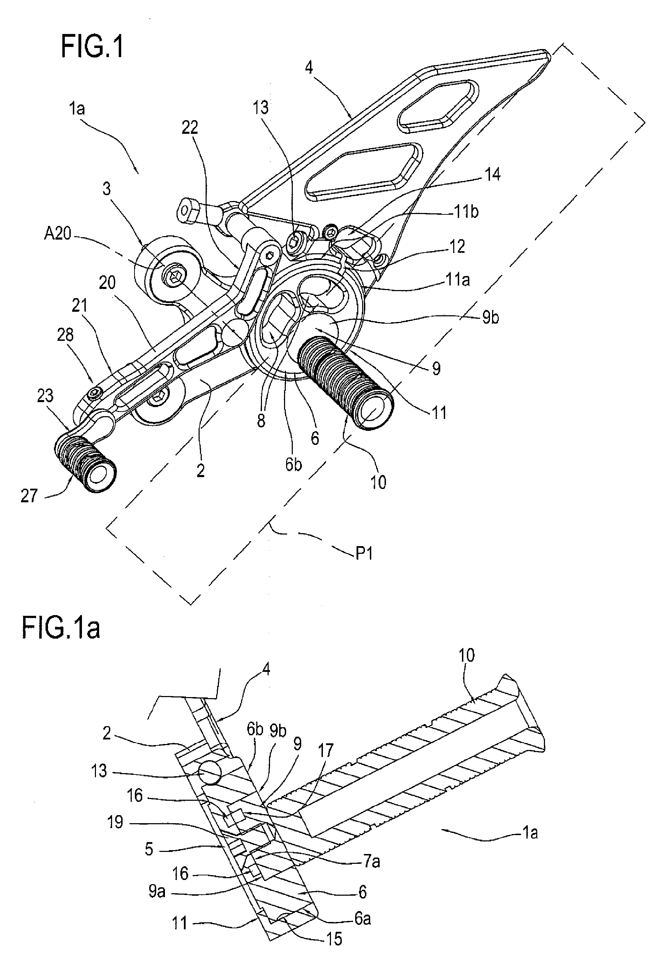

As shown in Figures 1 to 3, which illustrate the first embodiment, the footrest assembly 1a comprises a supporting structure 2 designed to be stably connected by screws 3 to the frame, not illustrated, of a motor vehicle.

The structure 2 is advantageously connected to a heel guard element 4 designed to protect the motor vehicle rider's foot against dangerous contact with moving parts of the motor vehicle.

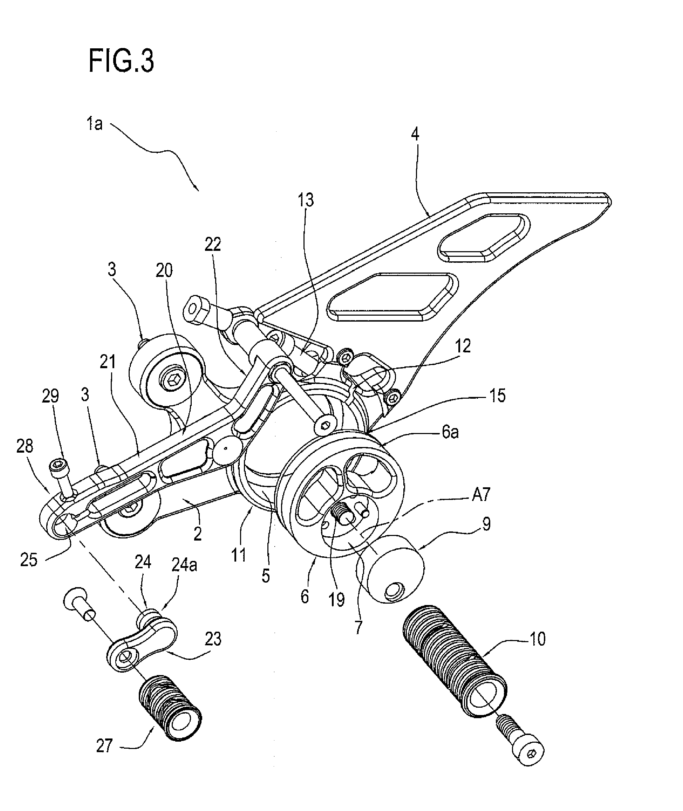

As shown in Figure 3, the supporting structure 2 has a circular through housing 5 made in it, which accommodates a first circular element 6.

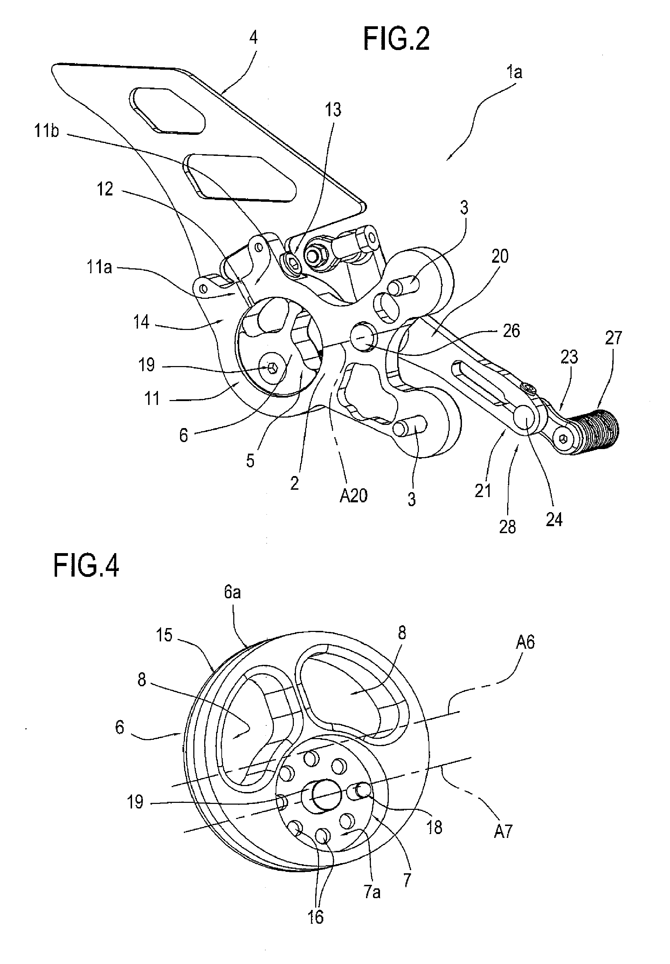

The first circular element 6, as clearly illustrated in Figure 4, has a central axis A6 and a respective cylindrical compartment 7 that is offset relative to the central axis A6. The first circular element 6 is designed to rotate about the its central axis A6 to adopt different angular positions relative to the housing 5, which is considered to be fixed.

The first circular element 6 also has two slots 8 made in it in order to make it lighter.

With reference to Figures 1 and 3, the footrest assembly 1a comprises a second circular element 9 positioned inside the cylindrical compartment 7 of the first circular element 6.

The second circular element 9 is designed to adopt, relative to the first circular element 6, different angular positions about a central axis A7 common to both the cylindrical compartment 7 and the second element 9 itself when it is positioned inside the compartment 7.

The footrest assembly 1a also comprises a footrest piece 10 mounted on the second circular element 9 eccentrically relative to the latter's central axis A7.

As shown in Figures 1 to 3, a part of the circumference of the circular housing 5 on the supporting structure 2 is bounded by a perimetric edge 11.

Along the edge 11 there is a through slot 12 which divides the edge 11 into two facing portions 11a, 11b.

The two portions 11a, 11b of the edge 11 are connected by a clamping screw 13 designed to draw them together, thus creating a friction coupling between the housing 5 and the first circular element 6 located inside it.

This friction coupling, of the slotted clamp type as just described by way of non-limiting example, constitutes means 14 for clamping the first circular element 6 inside the respective circular housing 5.

With reference to Figures 3 and 4, the first circular element 6 has a side wall 6a with a circumferential cavity 15 made in it.

When the first circular element 6 is located inside the circular housing 5 of the structure 2, the clamping screw 13 is partly engaged in the circumferential cavity 15, forming a shape obstacle which prevents the first circular element 6 from sliding relative to its housing 5, in a direction parallel to the central axis A6 of the first element 6 itself.

With reference to Figures 3 and 4, the cylindrical compartment 7 of the first element 6 has a circular inside end wall 7a which, when the second circular element 9 is located inside the compartment 7 itself, faces a respective inside face 9a of the second circular element 9, as illustrated in Figure 1a.

The circular inside end wall 7a is provided with a plurality of blind holes 16 designed to define a corresponding plurality of different mutual angular positions between the first circular element 6 and the second circular element 9.

For this purpose, the inside face 9a of the second circular element 9 is provided with two holes 17, only one of which is shown in Figure 1a, one or the other of which comes alternately into alignment with each of the holes 16 of said plurality and, by means of a pin 18 designed to be inserted into the aligned holes 16, 17, prevents the second circular element 9 from rotating in the cylindrical compartment 7 in which it is located.

The two holes 17 made on the inside face 9a of the second circular element 9 are angularly spaced from each other by an angle, referenced to the central axis A7, that is not a multiple of the angle between the angularly equispaced holes 16 in the inside end wall 7a of the cylindrical compartment 7. Thus, supposing said plurality comprises N holes 16, the N holes can be used to obtain 2N different mutual angular positions of the first and second circular elements 6, 9, that is to say, N positions by inserting the pin 18 into one of the two holes 17 and another N positions by inserting it into the other of the two holes 17.

The footrest assembly 1a further comprises a screw 19 for fastening the second circular element 9 and the first circular element 6 to each other.

With reference to Figures 1 to 3, the footrest assembly 1a comprises a rocker lever 20 having a first arm 21 and a second arm 22 positioned on opposite sides of a respective pivot axis A20.

At a distal end of its first arm 21, the rocker lever 20 comprises an articulated portion 23.

The articulated portion 23 has a protruding element 24 designed to be inserted into a matching socket 25 formed on the first arm 21. The protruding element 24 and the respective socket 25 constitute means for connecting the articulated end portion 23 to the first arm 21 of the lever 20.

As illustrated in Figures 1 to 3, the rocker lever 20 of the footrest assembly 1a is pivoted to the supporting structure 2 by a suitable pin 26 in such a way as to oscillate about the pivot axis A20 and its end portion 23 mounts a respective control pedal 27 forming part, for example, of the braking device or of the speed change unit of the motor vehicle.

The footrest assembly 1a comprises means 28 for clamping the articulated portion 23 with respect to the lever 20 so as to hold them in a stable position relative to each other.

The clamping means 28 advantageously, but not necessarily, comprise a friction coupling between the protruding element 24 and the socket 25, said coupling being of the slotted clamp type.

A clamping screw 29 makes it possible to tighten the socket 25 round the protruding element 24.

Alternative, equivalent forms of the couplings, not illustrated, might comprise respective grooved profiles in the protruding element 24 and in the socket 25.

With reference to Figure 3, the protruding element 24 has a side wall with a circumferential cavity 24a made in it.

When the protruding element 24 is located inside the socket 25, the clamping screw 29 is partly engaged in the circumferential cavity 24a, forming a shape obstacle which prevents the protruding element 24 from sliding relative to the socket 25 in a direction substantially parallel to the pivot axis A20 of the lever 20. The clamping screw 29 and the cavity 24a thus constitute means for preventing the end portion 23 from sliding relative to the rocker lever 20.

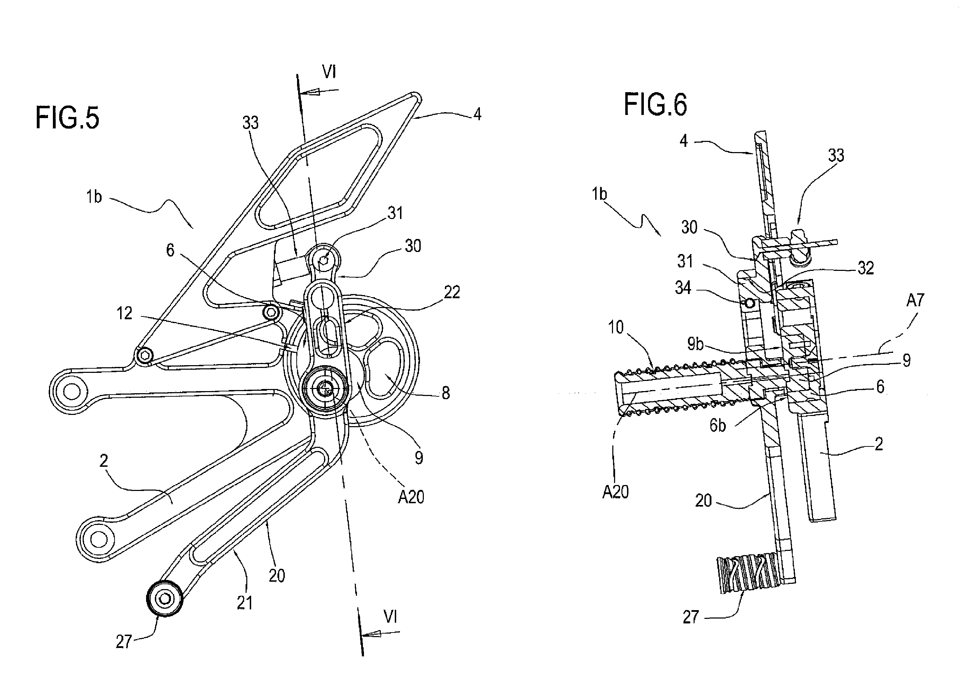

The reference numeral 1b in Figure 5 denotes the second embodiment of the motor vehicle footrest assembly according to the invention.

The footrest assembly 1b differs from the footrest assembly 1a just described essentially and exclusively in the characteristics of the rocker lever 20. For all the other component parts of the footrest assembly 1b, reference is made, for brevity, to the above description and only the salient features of the second embodiment 1b are described below.

As illustrated in Figure 5, the footrest assembly 1b comprises a rocker lever 20 having a first arm 21 and a second arm 22 positioned on opposite sides of a respective pivot axis A20.

At a distal end of its second arm 22, the rocker lever 20 comprises an articulated portion 30.

The articulated portion 30 has a protruding element 31 designed to be inserted into a matching socket 32 formed on the second arm 22. The protruding element 31 and the respective socket 32 constitute means for connecting the articulated end portion 30 to the second arm 22 of the lever 20.

As illustrated in Figure 6, the rocker lever 20 of the footrest assembly 1b is pivoted to the second circular element 9 coaxially with the footrest piece 10 in such a way as to oscillate about the pivot axis A20 which coincides with an axis of the footrest piece 10 and which is offset relative to the central axis A7 of the second circular element 9 itself.

At its distal end, the above mentioned first arm 21 mounts a respective pedal 27, while the articulated end portion 30 linked to the second arm 22, mounts an element 33 designed to be connected to means, not illustrated, for driving the motor vehicle, such as, for example, the speed change unit or the brake.

In Figure 5, by way of non-limiting example, the connecting element 33 is in the form of a conrod partly covered by the heel guard element 4.

The footrest assembly 1b comprises means for clamping the articulated portion 30 with respect to the lever 20 so as to hold them in a stable position relative to each other.

Similarly to what is described above with reference to the footrest assembly 1a, these clamping means advantageously, but not necessarily, comprise a friction coupling between the protruding element 31 and the socket 32, said coupling being of the slotted clamp type.

A clamping screw 34 makes it possible to tighten the socket 32 round the protruding element 31.

Alternative, equivalent forms of the couplings, not illustrated, might comprise respective grooved profiles in the protruding element 31 and in the socket 32.

Similarly to what is described above with reference to the footrest assembly 1a, the protruding element 31 of the footrest assembly 1b also has a circumferential cavity, not illustrated in detail, made in its side wall and designed to engage with the clamping screw 34 to create a shape obstacle preventing the protruding element 31 from sliding relative to the socket 32 itself.

The clamping screw 34 and the circumferential cavity, not illustrated in detail, constitute means for preventing the articulated end portion 30 from sliding relative to the rocker lever 20.

Advantageously, in both the embodiments 1a, 1b of the footrest assembly according to the invention, the first circular element 6 and the second circular element 9 have two respective flat outside faces 6b, 9b which, when the second element 9 is positioned inside the cylindrical compartment 7, are substantially coplanar.

In use, it is possible to rotate the first circular element 6 in the housing 5 about its axis A6, thereby allowing a first degree of adjustment of the footrest assembly 1a, 1b and, in particular, of its footrest piece 10.

A second degree of adjustment of the footrest assembly 1a, 1b is allowed by the possibility of changing the angular position of the second element 9 inside the cylindrical compartment 7.

Basically, these two different degrees of adjustment of the position of the footrest piece 10 are permitted by the fact that the the footrest piece 10 is mounted eccentrically on the circular element 9 which is in turn positioned eccentrically on the first circular element 6.

A third degree of adjustment of the footrest assembly 1a, 1b is allowed by the possibility of moving the respective articulated end portion 23, 30 of the rocker lever 20.

This third degree of adjustment does not act on the position of the footrest piece 10 relative to the motor vehicle frame, like the first two degrees of adjustment but, in the case of the footrest assembly 1a, on the distance between the footrest piece 10 and the control pedal 27 and, in the case of the footrest assembly 1b, on the distance between the pivot of the lever 20 and the element 33 that connects the drive controls such as brake and speed change.

Whereas in the first case, that is, in the footrest assembly 1a, the third degree of adjustment advantageously permits adjustment of the distance between the point where the foot is rested and the point where force is applied to operate the speed change unit or the brake, in the second case, that is, in the footrest assembly 1b, the third degree of adjustment makes it possible to adjust the connection between the rocker lever 20 and the connection elements present 33 on the motor vehicle, thus providing a high degree of versatility for the footrest assembly 1b.

## Claims

1. A footrest assembly for motor vehicles comprising:
- a supporting structure (2) designed to be stably connected to the frame of a motor vehicle, said structure (2) having a circular housing (5);
- a first circular element (6) located inside the housing (5) and having a respective cylindrical compartment (7) offset relative to a central axis (A6) of the first element (6), said first element (6) being designed to rotate relative to the housing (5);
- a second circular element (9) positioned at least partially inside the cylindrical compartment (7) and designed to adopt different positions relative to it;
- a footrest piece (10) mounted eccentrically on the second circular element (9).

2. The footrest assembly according to claim 1,
**characterized in that** it comprises a rocker lever (20), said rocker lever (20) having two arms (21, 22) located on opposite sides of a respective pivot axis (A20), one of the arms (21, 22) having a respective articulated end portion (23; 30).

3. The footrest assembly according to claim 2,
**characterized in that** it comprises means for connecting the end portion (23; 30) to a respective arm (21, 22) of the lever (20).

4. The footrest assembly according to claim 2 or 3, **characterized in that** the rocker lever (20) is pivoted on the supporting structure (2) and **in that** the articulated end portion (23) mounts a respective control pedal (27).

5. The footrest assembly according to claim 2 or 3, **characterized in that** the rocker lever (20) is pivoted on the second circular element (9) coaxially with the footrest piece (10) and **in that** the articulated end portion (30) mounts an element (33) designed to be connected to motor vehicle drive controls.

6. The footrest assembly according to any of the foregoing claims from 1 to 5, **characterized in that** it comprises means (14) for clamping the first circular element (6) in the housing (5), said clamping means (14) comprising a friction coupling.

7. The footrest assembly according to claim 6, **characterized in that** the friction coupling is of the slotted clamp type.

8. The footrest assembly according to any of the foregoing claims from 1 to 7, **characterized in that** it comprises means for preventing the first circular element (6) from moving out of the circular housing (5) in a direction parallel to the central axis (A6) of the first circular element (6) itself, said means comprising a circumferential cavity (15) made in a side wall (6a) of the first circular element (6).

9. The footrest assembly according to any of the foregoing claims from 1 to 8, where the cylindrical compartment (7) has a circular inside end wall (7a) designed to face a respective inside face (9a) of the second circular element (9), the footrest assembly being **characterized in that** one of either the circular wall (7a) or the inside face (9a) is provided with a plurality of holes 16 designed to define a corresponding plurality of different mutual angular positions between the first and the second element (6, 9).

10. The footrest assembly according to claim 9, **characterized in that** the other of either the circular wall (7a) or the inside face (9a) is provided with at least one hole (17) designed to comes into alignment with each of the holes (16) of said plurality; a pin (18) being provided and being designed to be inserted into the aligned holes (16, 17) to prevent the second circular element (9) from rotating in the cylindrical compartment (7).

11. The footrest assembly according to claim 9 or 10, **characterized in that** it comprises at least one screw (19) for fastening the second circular element (9) and the first circular element (6) to each another.

12. The footrest assembly according to any of the foregoing claims from 1 to 11, **characterized in that** the first circular element (6) and the second circular element (9) have two respective flat outside faces (6b, 9b) which, when the second element (9) is positioned inside the cylindrical compartment (7), are substantially coplanar.

13. The footrest assembly according to any of the foregoing claims from 2 to 12, **characterized in that** it comprises means (28) for clamping the articulated end portion (23; 30) relative to the rocker lever (20).

14. The footrest assembly according to claim 13, **characterized in that** the clamping means (28) comprise a friction coupling of the slotted clamp type.

15. The footrest assembly according to claim 13 or 14, **characterized in that** it comprises means for preventing the articulated end portion (23; 30) from sliding relative to the rocker lever (20) in a direction parallel to the pivot axis (A20) of the lever (20) itself.
